# EUROPEAN PATENT APPLICATION

(11) **EP 3 428 532 A1**
(43) Date of publication of application: **16.01.2019**
(21) Application number: 17020298.0
(22) Date of filing: 12.07.2017
(51) Int. Cl.: F23D 14/32, F23D 99/00, F23L 7/00, C01B 13/02

(54) **METHODS FOR OPERATING AN OXY-FUEL BURNER**

(71) Applicant: Linde Aktiengesellschaft, 80331 München (DE)
(72) Inventor: Weikl, Markus, 82544 Egling (DE); Hentschel, Benjamin, 80689 München (DE)
(74) Representative: Gellner, Bernd

(57) **Abstract**

The invention relates to a method for operating an oxy-fuel burner (140) by use of fuel and oxygen, wherein oxygen (c) is produced by means of an oxygen transfer membrane device (130) on a product side (132), the oxygen transfer membrane device (130) being supplied with compressed air (a') at a feed side (131), wherein natural gas (d) is supplied to the oxygen transfer membrane device (130) on the product side (132), wherein a synthesis gas (f) resulting from a combustion of at least part of the natural gas (d) and the oxygen (c) being produced in the oxygen transfer membrane device (130) is then supplied to the oxy-fuel burner (140), wherein further oxygen (g) is supplied to the oxy-fuel burner (140) separately from the oxygen transfer membrane device (130), and wherein the amount of oxygen produced by means of the oxygen transfer membrane device (130) is less than 50% of an amount necessary for complete oxidation of the natural gas (d) being supplied to the oxygen transfer membrane device (130), as well as a further method and an apparatus (100).

## Description

### Technical Field

The invention relates to methods for operating an oxy-fuel burner and an apparatus adapted to perform such methods.

### Prior Art

For operating glass melting furnaces oxy-fuel burners can be used, i.e enthalpy for melting of glass in glass furnaces is provided by combustion of fossil fuels, in particular natural gas. In order to reduce consumption of natural gas, such burners may be equipped with heat recovery regenerators. Regenerators typically include two chambers, each of which is filled with stacked refractory bricks. One regenerator can be heated by flue gas exiting the burner at temperatures of about 1400°C to 1600°C. At the same time the second regenerator can preheat combustion air to a temperature of up to 1350°C. When the preheating temperature of air falls below a predefined level, operation is switched and the first regenerator is used for preheating.

Also, recuperative preheating of air can be applied, although lower heat recovery rates are obtained. Oxy-fuel firing has the potential to further reduce consumption of natural gas since no nitrogen is involved in the combustion process which yields higher combustion temperatures. At the same time emission of nitrous oxides (NOₓ) generated during the combustion process can be reduced. In view of economical reasons, the cost of oxygen in this process is critical since the additional costs of oxygen should be compensated by the reduction of the costs of natural gas, as long as no soft factors like environmental requirements for reduced nitrous oxide emissions can be achieved.

Typical glass melting furnaces are described, for example, in "Glass Furnaces: Design, Construction and Operation", W. Trier and K. Loewenstein (Society of Glass Technology, 1987)", accessible via http://www.lehigh.edu/imi/teched/GiassProcess/Lectures/Lecture03_Hubert_industgias smeltfurnaces.pdf. Oxy-fuel burners typically require delivery of liquid oxygen to site. Alternatively, oxygen generators (e.g. based on Vacuum Pressure Swing Absoportion, VPSA) are used with a purity of the oxygen of more than 95% which, however, still leads to production of nitrous oxides due to remaining nitrogen.

Methods for operating an oxy-fuel burner are known, for example, from US 7 384 452 B2, which make use of an oxygen transfer membrane (OTM) in order to provide oxygen for the combustion of fuel. By means of the oxygen transfer membrane an amount of more than 50% of oxygen necessary for complete oxydation of fuel present is provided, while a process fluid is (indirectly) heated in a device comprising the oxygen transfer membrane.

The present invention aims to improve efficiency of operating an oxy-fuel burner with oxygen supply, in particular when using for glass melting furnaces.

### Disclosure of the Invention

This object is achieved by providing methods and an apparatus according to the independent claims. Advantageous embodiments are the subject of the dependent claims as well as of the following description.

A first aspect of the invention relates to a method for operating an oxy-fuel burner by use of fuel and oxygen. Preferably, the oxy-fuel burner is used for operating a glass melting furnace. Oxygen is produced by means of an oxygen transfer membrane device on a product side, the oxygen transfer membrane device being supplied with compressed air at a feed side. Such an oxygen transfer membrane device includes an oxygen transfer membrane which is provided with the compressed air on one side of the membrane, i.e. the feed side. Oxygen then permeates through the membrane to the other side of the membrane, called product side.

Further, natural gas is supplied to the oxygen transfer membrane device on the product side and a synthesis gas resulting from a combustion of at least part of the natural gas and the oxygen being produced in the oxygen transfer membrane device is then supplied to the oxy-fuel burner. Advantageously, the natural gas being supplied to the oxygen transfer membrane device is preheated to a temperature between 400°C and 600°C, in particular between 500°C and 600°C. The amount of oxygen produced by means of the oxygen transfer membrane device is less than 50%, preferably less than 40%, of an amount necessary for complete oxidation of the natural gas being supplied to the oxygen transfer membrane device. In addition to the oxygen provided by the oxygen transfer membrane, further oxygen is supplied to the oxy-fuel burner from external sources. Such additional oxygen supply can be provided, for example, in liquid form and/or preheated.

By supplying natural gas to the product side of the oxygen transfer membrane device, a partial oxidation at the product side may take place. The oxygen transported through the (dense) membrane will react with natural gas, which mainly includes methane (CH₄), in an exothermal partial oxidation reaction

(1) 2CH₄+O₂ -> 2CO+ 4H₂

up to a complete combustion reaction

(2) CH₄ + 2O₂ -> CO₂ + 2H₂O.

The relative rate between reactions (1) and (2) can be adjusted depending on process parameters. Preferably, steam and/or water containing flue gas exiting the oxy-fuel burner is supplied to the oxygen transfer membrane device at the product side in addition. This results in endothermic reforming reactions

(3) CH₄ + H₂O → CO + 3H₂,

(4) CH₄ + CO₂ → 2CO + 2H₂.

These reactions (3) and (4) can further be supported by catalysts, typically known from steam methane reforming, in the product side or by a catalytic coating in the membrane surface. The hot product gas, called synthesis gas or syngas, is then led to the burner and the remaining required oxygen is supplied by external sources. Increased steam and flue gas content will have a dampening effect on the adiabatic temperature increase due to reactions (3) and (4). For example, exothermal heat release of approx. 10 reactions of type (1) will provide thermal energy to conduct one reaction of type (3).

Preferably, the compressed air being supplied to the oxygen transfer membrane device is heated by means of a heat exchanger, in particular including at least one regenerator, the heat exchanger being heated by flue gas exiting the oxy-fuel burner. Advantageously, the compressed air is heated to a temperature between 800°C and 900°C, in order to make the overall process more energy efficient. Flue gas exiting the heat exchanger can then be vented to atmosphere.

Further, if the heat of the regenerator is not sufficient to heat the compressed air to the desired temperature it can be directly heated by combustion with natural gas by supplying such natural gas to the compressed air. Also, air exiting the oxygen transfer membrane device from the feed side can preferably be used to compress air to be supplied to the oxygen transfer membrane device by means of an expansion turbine, in order to increase overall process efficiency. The expansion turbine can be used to drive a generator for a compressor or to drive the compressor directly.

Advantages of this method are that no flue gas cleaning is required, since the flue gas entering the oxygen transfer membrane is highly diluted by natural gas, thus reducing equipment count and thereby capital expense. Further, thermal energy from the flue gas can be recovered as chemical energy via reactions (3) and (4), reducing natural gas consumption and thus reducing operational expense. Further, in case of membrane fracture or any other failure of the oxygen transfer membrane device, oxygen can be supplied by the additional external supply and thus can keep the burner in operation. This also helps to reduce any risks of this new OTM technology. Further, a partial pressure of oxygen on the product side is close to zero, thus lower pressure on the feed side can be applied and a smaller membrane area can be expected.

Further, since the amount of oxygen produced by means of the oxygen transfer membrane device is less than 50% of the oxygen required for complete oxidation, adiabatic temperature rise can be kept low. This is of particular advantage for processes not using the oxidation at the product side for heating process fluids or the like, which could reduce the heat.

A further aspect of the invention relates to a method for operating an oxy-fuel burner by use of fuel and oxygen, the fuel being supplied to the oxy-fuel burner and the oxy-fuel burner being used for operating a glass melting furnace. Oxygen is produced by means of an oxygen transfer membrane device on a product side, the oxygen transfer membrane device being supplied with compressed air at a feed side. Flue gas exiting the oxy-fuel burner is supplied to the oxygen transfer membrane device at the product side in order to sweep away oxygen in the oxygen transfer membrane device at the product side, thereby reducing the oxygen partial pressure and enhancing the driving force for the oxygen flux. The oxygen enriched flue gas is then supplied to the oxy-fuel burner.

Advantageously, the flue gas being supplied to the oxygen transfer membrane device is cooled, boosted and then heated by means of a heat exchanger, in particular including at least one regenerator, the heat exchanger being heated by flue gas exiting the oxy-fuel burner. The flue gas is preferfably heated to a temperature between 800°C and 900°C.

Preferably, the compressed air being supplied to the oxygen transfer membrane device is also heated by means of a heat exchanger, in particular including at least one regenerator, the heat exchanger being heated by flue gas exiting the oxy-fuel burner. Advantageously, the compressed air is heated to a temperature between 800°C and 900°C, in order to increase overall process efficiency. Flue gas exiting the heat exchanger can then be vented to atmosphere.

In particular, this allows using two regenerators, each with two chambers. A first regenerator is preheated by flue gas exiting the burner. Part of the flue gas can be led to atmosphere. The other part of the flue gas can preferably be cooled and/or boosted with a flue gas blower or booster and, preferably, also be cleaned from dust and volatile components in the flue gas. After cleaning, the flue gas can be preheated by a second regenerator.

Preferably, natural gas is supplied to the oxygen transfer membrane device on the product side or to a stream of the flue gas being supplied to the oxygen transfer membrane device. This allows increasing the temperature adiabatically, if, for example, a temperature of about 850°C to 950°C cannot be reached by the regenerator only. The heated flue gas is then used as a sweep gas in the oxygen transfer membrane device. This process is also called "4-end process". In this way, partial pressure of oxygen on the product side is reduced yielding higher oxygen flux over the membrane.

Finally, the oxygen enriched flue gas is led to the burner for combustion with fuel, e.g., natural gas, heating the glass furnace. Due to partial pressure difference of oxygen between feed side and product side, part of the oxygen is transported through the (dense) membrane from the feed side to the product side.

Advantageously, the flue gas being supplied to the oxygen transfer membrane device is cooled, boosted and then heated by means of a heat exchanger, in particular including at least one regenerator, the heat exchanger being heated by flue gas exiting the oxy-fuel burner. The flue gas is preferfably heated to a temperature between 800°C and 900°C.

Preferably, the compressed air being supplied to the oxygen transfer membrane device is also heated by means of a heat exchanger, in particular including at least one regenerator, the heat exchanger being heated by flue gas exiting the oxy-fuel burner. Advantageously, the compressed air is heated to a temperature between 800°C and 900°C, in order to make the overall process more energy efficient. Flue gas exiting the heat exchanger can then be vented to atmosphere.

Further, if the heat of the regenerator is not sufficient to heat the compressed air to the desired temperature it can be directly heated by combustion with natural gas by supplying such natural gas to the compressed air. Also, air exiting the oxygen transfer membrane device from the feed side can preferably be used to compress air to be supplied to the oxygen transfer membrane device by means of an expansion turbine, in order to increase overall process efficency. The expansion turbine can be used to drive a generator for a compressor or to drive the compressor directly.

Also, additional oxygen can be supplied to the burner separately from the oxygen transfer membrane device, as is decribed for the first aspect. This helps to prevent a breakdown in case of a mebrame failure.

In the proposed process, available thermal energy from the combustion process is used to produce oxygen. Expansion of hot retentate air can yield electrical energy in the turbine thus supplying at least the energy required for operation of the air compressor. Oxy-fuel flue gas in the furnace (with high CO₂ content) is known to have higher rate of IR radiative heat transfer compared to an air-based flue gas (high N₂ content), thereby further increasing efficiency of the furnace and/or product quality. Due to high oxygen selectivity, the flue gas of the melting furnace is carbon dioxide capture and storage (CCS) ready or can be cleaned with relatively low effort to yield a high purity CO₂ stream.

Both methods described allow for an improved and efficient use of an oxygen transfer membrane in order to provide oxygen on site for operating an oxy-fuel burner, which, in particular, is used for a glass melting furnace.

A further aspect of the invention relates to an apparatus including an oxy-fuel burner and an oxygen transfer membrane device, the apparatus being adapted to perform any of the methods according to the invention.

The invention will now be further described with reference to the accompanying drawings, which show a preferred embodiment.

### Brief description of the drawings

- Fig. 1: schematically shows an apparatus, with which a method of the present invention in a preferred embodiment can advantageously be implemented.
- Fig. 2: schematically shows an apparatus, with which a method of the present invention in a further preferred embodiment can advantageously be implemented.

### Detailed description of the drawings

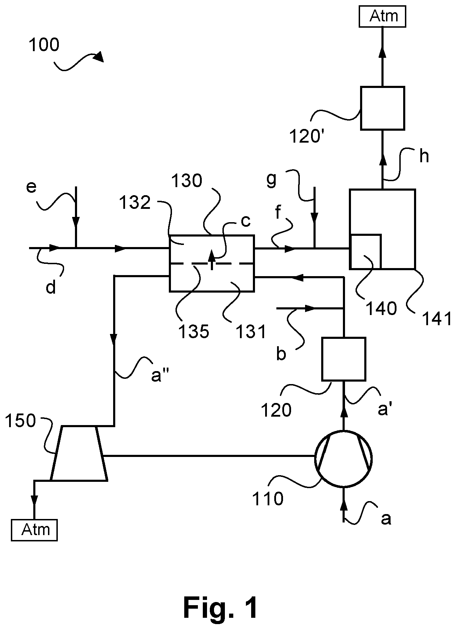

In Fig. 1, an apparatus 100, with which a method of the present invention in a preferred embodiment can advantageously be implemented, is shown. The apparatus 100 includes an oxygen transfermembrane device 130 and an oxy-fuel burner 140. The oxy-fuel burner 140 is used to operate, i.e. to heat, a glass melting furnace 141. Further devices of apparatus 100 will be described in the following.

Air is supplied as stream a to a compressor 110 in order to provide compressed air, dentoted by stream a'. The compressed air a' is then lead through a heat exchanger including a regenerator 120. The regenerator 120 is used to preheat the compressed air a' before it is supplied to a product side 131 of the oxygen transfermembrane device 131. Optionally, natural gas, denoted by stream b, can be supplied to the product side 131 or to stream a' of compressed air.

By means of oxygen transfer membrane device 130 oxygen, denoted by stream c, is produced in that oxygen present in the compressed air permeates through oxygen transfer membrane 135, which is arranged in oxygen transfermembrane device 130.

Remaining air or compressed air in the feed side 131 is then lead as stream a" through an expansion turbine 150 before being fed to atmosphere. The expansion turbine 150 is used to drive compressor 110. Thus, remaining engery in the compressed air is further used in the process.

Natural gas, denoted by stream d, is now fed to product side 132 of oxygen transfermembrane device 130, in which also oxygen c is present. Thus, at the product side the above mentioned reactions can take place and the natural gas is combusted. The product of the reaction, synthesis gas, denoted by stream f, is then fed to oxy-fuel burner 140 and glass melting furnace 141, respectively.

A further oxygen stream g is supplied to oxy-fuel burner 140 and glass melting furnace 141, respectively, and separately from oxygen transfer membrane device 130, i.e. by an external source. Oxygen stream g can be provided by, for example, a liquid oxygen source.

Oxygen streams c and g are thus used in order to completely combust the fuel (natural gas) present. Stream c, however, is of such amount that less than 50% of the fuel entering the oxygen transfer membrane device 130 can be combusted. This prevents oxygen transfer membrane device 130 from becoming to hot.

Flue gas exiting oxy-fuel burner 140 and glass melting furnace 141, respectively, denoted by stream h, is lead through a further regenerator 120' and then vented to atmosphere. Regenerators 120 and 120' can therefore be used alternatingly in order to preheat the compressed air a' by means of heat energy of the flue gas h.

Optionally, steam, that is gaseous water, denoted by stream e, can be supplied to product side 132. Alternatively, flue gas exiting oxy-fuel burner 140 and glass melting furnace 141, respectively, can be supplied to product side 132. This helps to reduce the amount of fuel necessary for oxy-fuel burner 140, as can be derived from the reactions menitoned earlier.

Allowed temperatures of oxygen transfer membrane 135 are for example about 1000°C if perovskite is used. When fluorite is used, for example, the allowed temperatures are about 1300°C. Since reaction (3) mentioned above, which is steam reformation, is endothermic, the temperature in oxygen transfer membrane device 130 can be reduced without cooling by a process fluid or the like. Similar considerations apply for reaction (4) mentioned above.

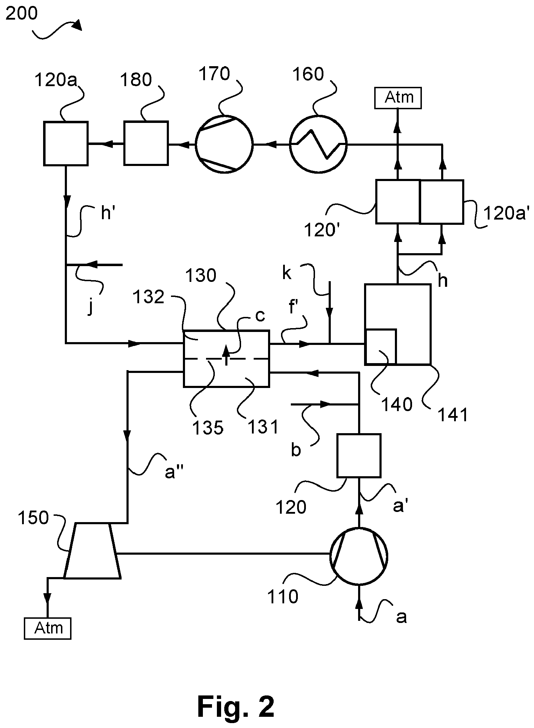

In Fig. 2, schematically an apparatus 200, with which a method of the present invention in a further preferred embodiment can advantageously be implemented, is shown. Apparatus 200 includes an oxygen transfermembrane device 130 and an oxy-fuel burner 140. The oxy-fuel burner 140 is used to operate, i.e. to heat, a glass melting furnace 141. Further devices of apparaturs 200 will be described in the following.

The process steps for generating oxygen (stream c) by means of oxygen transfer membrane device 130 and the devices used therein correspond to the steps described in view of Fig. 1 and apparatus 100. Thus, it is referred to the corresponding description.

However, flue gas exiting oxy-fuel burner 140 and glass melting furnace 141, respectively, is fed to product side 132 of the oxygen transfer membrane instead of natural gas. Nevertheless, some natural gas, denoted by stream j, can be fed upstream of product side 132 to increase temperature, if required.

Before being supplied to product side 132, flue gas h is used to preheat the compressed air by means of regenerators 120 and 120'. Further, the flue gas is used to preheat the flue gas stream at a later stage by means of further regenerators (or a further heat exchanger) 120a and 120a'. Regenerators 120' and 120a' (as well as 120 and 120a) can be formed by two chambers of one large regenerator, for example. Part of flue gas h can then be vented to atmosphere, the remaining part, denoted by stream h', can then be cooled by means of a cooler 160, boosted by means of a booster 170 and then be cleaned from dust and the like by means of a cleaner 180. After that, flue gas h' can be preheated, e.g. by means of regenerator 120a, to a required temperature and fed to product side 132.

Flue gas h' is thus used to sweep away oxygen c, produced in oxygen transfer membrane device 130. Oxygen enriched flue gas (denoted by stream f') is then supplied to oxy-fuel burner 140 and glass melting furnace 141, respectively. The oxygen is then used to combust fuel (denoted by stream k), in particular natural gas, supplied to oxy-fuel burner 140.

Optionally, additional oxygen can be supplied to oxy-fuel burner 140 and glass melting furnace 141, respectively, as is described for apparatus 100 with stream g, if required.

## Claims

1. Method for operating an oxy-fuel burner (140) by use of fuel and oxygen,
wherein oxygen (c) is produced by means of an oxygen transfer membrane device (130) on a product side (132), the oxygen transfer membrane device (130) being supplied with compressed air (a') at a feed side (131),
wherein natural gas (d) is supplied to the oxygen transfer membrane device (130) on the product side (132),
wherein a synthesis gas (f) resulting from a combustion of at least part of the natural gas (d) and the oxygen (c) being produced in the oxygen transfer membrane device (130) is then supplied to the oxy-fuel burner (140),
wherein further oxygen (g) is supplied to the oxy-fuel burner (140) by an external source, and
wherein the amount of oxygen produced by means of the oxygen transfer membrane device (130) is less than 50% of an amount necessary for complete oxidation of the natural gas (d) being supplied to the oxygen transfer membrane device (130).

2. Method according to claim 1, wherein additionally steam (e) and/or water containing flue gas exiting the oxy-fuel burner, is supplied to the oxygen transfer membrane device (130) at the product side (132).

3. Method according to anyone of the preceding claims, wherein the natural gas (d) being supplied to the oxygen transfer membrane device (130) is preheated to a temperature between 400°C and 600°C, in particular between 500°C and 600°C.

4. Method according to anyone of the preceding claims, wherein the oxy-fuel burner (140) is used for operating a glass melting furnace (141).

5. Method for operating an oxy-fuel burner (140) by use of fuel and oxygen, the fuel (k) being supplied to the oxy-fuel burner (140),
wherein oxygen (c) is produced by means of an oxygen transfer membrane device (130) on a product side (132), the oxygen transfer membrane device (130) being supplied with compressed air (a') at a feed side (131), and
wherein flue gas (h') exiting the oxy-fuel burner is supplied to the oxygen transfer membrane device (130) at the product side (132) in order to sweep away oxygen (c) in the oxygen transfer membrane device (130) at the product side (132), the oxygen enriched flue gas (f') being supplied to the oxy-fuel burner (140),
wherein the oxy-fuel burner (140) is used for operating a glass melting furnace (141).

6. Method according to claim 5, wherein natural gas (j) is supplied to the oxygen transfer membrane device (130) on the product side (132) or to a stream of the flue gas being supplied to the oxygen transfer membrane device.

7. Method according to claim 5 or 6, wherein the flue gas (h') exiting the oxy-fuel burner (140) is cleaned before being supplied to the oxygen transfer membrane device (130).

8. Method according to anyone of claims 5 to 7, wherein the flue gas (h') being supplied to the oxygen transfer membrane device (130) is cooled, boosted and then heated by means of a heat exchanger, in particular including at least one regenerator (120a, 120a'), the heat exchanger being heated by flue gas (h) exiting the oxy-fuel burner (140).

9. Method according to claim 8, wherein the flue gas (h') is heated to a temperature between 800°C and 900°C.

10. Method according to anyone of the preceding claims, wherein the compressed air (a') being supplied to the oxygen transfer membrane device (130) is heated by means of a heat exchanger, in particular including at least one regenerator (120, 120'), the heat exchanger being heated by flue gas (h) exiting the oxy-fuel burner (140).

11. Method according to claim 10, wherein the compressed air (a') is heated to a temperature between 800°C and 900°C.

12. Method according to anyone of the preceding claims, wherein natural gas (b) is supplied to a stream of compressed air (a') being supplied to the oxygen transfer membrane device (130).

13. Method according to anyone of the preceding claims, wherein air (a") exiting the oxygen transfer membrane device (130) from the feed side (131) is used to compress air to be supplied to the oxygen transfer membrane device (130) by means of an expansion turbine (150).

14. Apparatus (100, 200) including an oxy-fuel burner (140) and an oxygen transfer membrane device (130), adapted to perform a method according to anyone of the preceding claims.
